# EUROPÄISCHE PATENTANMELDUNG

(11) **EP 3 680 788 A1**
(43) Veröffentlichungstag der Anmeldung: **15.07.2020**
(21) Anmeldenummer: 19151206.0
(22) Anmeldetag: 10.01.2019
(51) Int. Cl.: G06F 16/21

(54) **MODELLIERUNG VON BETRIEBSMITTELN**

(71) Anmelder: Siemens Aktiengesellschaft, 80333 München (DE)
(72) Erfinder: Neumann, Andreas, 91080 Uttenreuth (DE); Franke, Bernd, 91350 Gremsdorf (DE)

(57) **Zusammenfassung**

Zur Modellierung von Betriebsmitteln (11, 13) mittels eines Datenmodells stellt eine Betriebsmittelverwaltung (10) eine Schnittstelle (M1-M4, M8) bereit, über welche das Datenmodell zugreifbar ist und über welche abhängig von dem Datenmodell gespeicherte Daten zugreifbar sind. Das Datenmodell ist in einem Modellierungswerkzeug (4) gespeichert, über welches die Betriebsmittelverwaltung (10) auf das Datenmodell zugreift. Dabei werden Daten mittels einer Datenbankstruktur, welche von dem Datenmodell abhängt, in einer Datenbank (2) gespeichert, auf welche die Betriebsmittelverwaltung (10) zugreift, um Daten in der Datenbank (2) zu speichern oder Daten aus der Datenbank (2) zu lesen, wobei die Dateneigenschaften der Betriebsmittel (11,13) umfassen.

## Beschreibung

Die vorliegende Erfindung betrifft die Modellierung von Betriebsmitteln, um insbesondere die Semantik, die Syntax und den Kontext von Daten in einer standardisierten Weise bereitzustellen.

Aktuell sind Daten, welche ein Hauptbestandteil der sich ausbreitenden Digitalisierung darstellen, mehr oder weniger gut in verschiedenen Systemen oder Werkzeugen definiert. Um allerdings Daten zwischen Systemen auszutauschen, sind Umsetzer oder Übersetzer erforderlich, um Daten von einem Datenmodell in ein anderes Datenmodell umzusetzen. Auch zur Einstellung von Geräten hinsichtlich einer Konfiguration für das Internet der Dinge ist es notwendig, die erforderlichen Daten umzusetzen, welche beispielsweise in Datenblättern oder in Systemen oder Werkzeugen verfügbar sind. Der Grund für diese erforderliche Umsetzung ist, dass die Semantik, die Syntax und der Kontext der Daten nicht in einer standardisierten Weise außerhalb dieser Systeme und Werkzeuge verfügbar sind, so dass diese Daten nicht einfach von anderen Systemen oder Werkzeugen wiederverwendet werden können und auch nicht zur Einstellung von Geräten bezüglich einer Konfiguration für das Internet der Dinge wiederbenutzt werden können.

Darüber hinaus existiert nach dem Stand der Technik nur sehr eingeschränkt die Möglichkeit, einen Benutzer oder eine Benutzergruppe auf der Grundlage von standardisierten Informationen zu autorisierten. Wenn beispielsweise im Internet der Dinge der Zugriff auf Daten zu bestimmten Betriebsmitteln autorisiert werden soll, dann kann nach dem Stand der Technik nur eine bestimmte Benutzergruppe, welche wiederum in Untergruppen aufgeteilt werden kann, autorisiert werden. In der Praxis kommt es jedoch vor, dass beispielsweise sowohl der Hersteller als auch der Eigentümer als auch der Betreiber (und weitere Benutzer) auf dieselben Betriebsmittel mit unterschiedlichen Sichten und Berechtigungen zugreifen. Das heißt, dass die Mengen der jeweiligen Betriebsmittel, für welche die jeweilige Benutzergruppe und der jeweilige Benutzer für einen Zugriff zu autorisieren ist, unterschiedlich sind.

Daher stellt sich die vorliegende Erfindung die Aufgabe, den Zugriff auf beliebig miteinander in Verbindung stehende Betriebsmittel unter Berücksichtigung von Berechtigungen zu verbessern, ohne dass dazu Umsetzer oder Übersetzer erforderlich sind.

Erfindungsgemäß wird diese Aufgabe durch ein Verfahren zur Modellierung von Betriebsmitteln nach Anspruch 1, durch ein System nach Anspruch 12, durch ein Computerprogrammprodukt nach Anspruch 14 und durch einen elektronisch lesbaren Datenträger nach Anspruch 15 gelöst. Die abhängigen Ansprüche definieren bevorzugte Ausführungsformen der vorliegenden Erfindung.

Im Rahmen der vorliegenden Erfindung wird ein Verfahren zur Modellierung von Betriebsmitteln mittels eines Datenmodells bereitgestellt. Dabei stellt eine Betriebsmittelverwaltung eine Schnittstelle bereit, über welche auf das Datenmodell und über welche auf abhängig von diesem Datenmodell gespeicherte Daten zugegriffen werden kann. Das Datenmodell selbst ist in einem Modellierungswerkzeug gespeichert, wobei die Betriebsmittelverwaltung über dieses Modellierungswerkzeug auf das Datenmodell zugreift. Über die Betriebsmittelverwaltung wird auf Daten zugegriffen, welche mittels einer Datenbankstruktur, welche von dem Datenmodell abhängt, in einer Datenbank gespeichert sind. Dabei umfasst der Zugriff auf diese Daten, welche auch Eigenschaften der Betriebsmittel umfassen, ein Speichern der Daten in der Datenbank oder ein Lesen der Daten aus der Datenbank.

Durch die Verwendung des Datenmodells, welches insbesondere ein allgemeingültiges oder standardisiertes Datenmodell ist, wird vorteilhafterweise die gesamte Betriebsmittelverwaltung einschließlich der Datenhaltung und Benutzeroberfläche gesteuert.

Das Datenmodell definiert insbesondere die Semantik, die Syntax und den Kontext der gespeicherten Daten, wodurch über die Schnittstelle der Betriebsmittelverwaltung zum einen auf das Datenmodell und zum anderen auch auf die abhängig von diesem Datenmodell gespeicherten Daten zugegriffen werden kann.

Indem anhand des allgemeingültigen Datenmodells die Semantik, die Syntax und der Kontext der Daten definiert sind, ist diese Semantik, diese Syntax und dieser Kontext vorteilhafterweise in einer standardisierten Weise verfügbar.

Gemäß einer bevorzugten erfindungsgemäßen Ausführungsform wird zusätzlich eine Autorisierungsverwaltung bereitgestellt. Die Basis für eine Konfiguration einer Autorisierung mittels der Autorisierungsverwaltung ist das allgemein gültige Datenmodell. Daher bestimmt die Autorisierungsverwaltung auf der Basis des Datenmodells durch entsprechende Filter eine Berechtigung eines bestimmten Benutzers oder einer bestimmten Benutzergruppe bezüglich bestimmter in der Datenbank gespeicherter Daten und bestimmter Elemente des Datenmodells. Dabei erfolgt der Zugriff über die Schnittstelle der Betriebsmittelverwaltung auf das Datenmodell und auf die abhängig von dem Datenmodell gespeicherten Daten in Abhängigkeit von dieser Autorisierungsverwaltung und damit abhängig von der durch diese Autorisierungsverwaltung bestimmten Berechtigung.

Eine Konfiguration der Autorisierung kann als ein Vertrag zwischen Benutzern angesehen werden, welche (zumindest teilweise) Zugriff auf die Daten eines Betriebsmittels haben. Im Rahmen dieser Konfiguration bzw. dieses Vertrages legen die Benutzer fest, welcher Benutzer wofür Schreib- und/oder Leserechte besitzt. Diesbezüglich ist es vorteilhaft, wenn die Konfiguration so geschützt wird, dass sie nicht einfach verändert werden kann, was beispielsweise mittels einer Blockchain-Technologie realisiert werden kann. Darüber hinaus werden Filter eingesetzt, um die Menge der Betriebsmittel und die Merkmale der Betriebsmittel abhängig von den Zugriffsrechten des jeweiligen Benutzers und abhängig vom Zustand der Betriebsmittel zu filtern basierend auf den Elementen des Datenmodells, so dass jeder Benutzer abhängig vom Zustand der Betriebsmittel nur Zugriff auf diejenigen Betriebsmittel und auf diejenigen Merkmale der Betriebsmittel hat, für die er auch berechtigt ist.

Es ist beispielsweise möglich, dass Daten zwischen den erfindungsgemäß modellierten Betriebsmitteln und einem fremden System über eine entsprechend definierte Schnittstelle ausgetauscht werden. Dabei bestimmt die Autorisierungsverwaltung mittels Filtern basierend auf den Elementen des Datenmodells, auf welche Menge der Betriebsmittel und auf welche Merkmale der Betriebsmittel das fremde System zugreifen darf. Diese Zugriffsberechtigungen sind in dem oben beschriebenen Vertrag festgelegt.

Dabei kann die Autorisierungsverwaltung die Berechtigung bezüglich der Daten eines Betriebsmittels abhängig von einer Sicht auf dieses Betriebsmittel und/oder abhängig von einem aktuellen Zustand des Betriebsmittels bestimmen.

Die bereitgestellte Autorisierungsverwaltung ermöglicht vorteilhafterweise, dass unterschiedliche Benutzergruppen unterschiedliche Berechtigungen für den Zugriff auf bestimmte Mengen der Betriebsmittel besitzen, auch wenn diese Mengen Schnittmengen aufweisen. Dadurch können vorteilhafterweise beispielsweise folgende Berechtigungen oder Autorisierungen realisiert werden:
- Ein Eigentümer besitzt nur eine Berechtigung für den Zugriff auf die ihm gehörenden Betriebsmittel, wobei diese Zugriffsberechtigung des Eigentümers unabhängig davon ist, wer die Betriebsmittel hergestellt hat oder wer die Betriebsmittel betreibt.
- Ein Hersteller besitzt nur eine Berechtigung für den Zugriff auf die von ihm hergestellten Betriebsmittel, wobei diese Zugriffsberechtigung des Herstellers unabhängig davon ist, wem die Betriebsmittel gehören oder wer die Betriebsmittel betreibt.
- Ein Betreiber besitzt nur eine Berechtigung für den Zugriff auf die von ihm betriebenen Betriebsmittel, wobei diese Zugriffsberechtigung des Betreibers unabhängig davon ist, wem die Betriebsmittel gehören oder wer die Betriebsmittel hergestellt hat.

Gemäß einer weiteren erfindungsgemäßen Ausführungsform kann für ein bestimmtes Betriebsmittel oder für mehrere bestimmte Betriebsmittel abhängig von einer Sicht auf dieses Betriebsmittel und/oder abhängig von einer Berechtigung für dieses Betriebsmittel über die Schnittstelle der Betriebsmittelverwaltung eine Benutzer-Schnittstelle bzw. Benutzeroberfläche in Abhängigkeit von dem Datenmodell bereitgestellt werden.

Diese Ausführungsform ermöglicht vorteilhafterweise, dass einer beliebigen Applikation (d.h. für einen Benutzer oder eine Benutzergruppe) eine Benutzer-Schnittstelle für bestimmte Betriebsmittel bereitgestellt wird.

Um die Benutzer-Schnittstelle für einen bestimmten Benutzer oder für eine bestimmte Benutzergruppe bereitzustellen, erfolgt die Bereitstellung der Benutzer-Schnittstelle insbesondere abhängig von der für diesen Benutzer oder für diese Benutzergruppe durch die Autorisierungsverwaltung bestimmten Berechtigung.

Dadurch wird vorteilhafterweise sichergestellt, dass über die bereitgestellte Benutzer-Schnittstelle für den jeweiligen Benutzer bzw. für die jeweilige Benutzergruppe der Zugriff nur auf diejenigen Daten der Betriebsmittel ermöglicht wird, für welche der jeweilige Benutzer bzw. die jeweilige Benutzergruppe eine Berechtigung aufweist.

Gemäß einer weiteren erfindungsgemäßen Ausführungsform existiert eine Merkmalsverwaltung, welche Merkmale verwaltet, die jeweils Eigenschaften eines Betriebsmittels oder mehrerer Betriebsmittel und Sichten auf das oder die Betriebsmittel definieren. Diese Merkmalsverwaltung stellt eine Suche nach einem bestimmten Merkmal bereit (z. B. in Form eines Filters) und/oder ist ausgestaltet, um ein neues Merkmal zu erzeugen.

Dabei wird unter einem Merkmal eine Eigenschaft eines Betriebsmittels verstanden, welche zum Beschreiben und Unterscheiden von Objekten und damit Betriebsmitteln dient. Das Merkmal dient somit der semantischen Definition eines Betriebsmittels. Sobald ein konkretes Betriebsmittel vorliegt besitzt ein Merkmal in der Regel einen Wert.

Mittels einer Sicht können die bezüglich eines oder mehrerer Betriebsmittel für den jeweiligen Benutzer sichtbaren Merkmale definiert werden.

Durch die Merkmalsverwaltung ist es vorteilhafterweise möglich, die Betriebsmittel anhand ihrer Eigenschaften und/oder Sichten anzusprechen oder auf die Betriebsmittel abhängig von den Werten ihrer Eigenschaften und/oder Sichten zuzugreifen. Dies ermöglicht somit auch den Einsatz der Filter.

Die Datenbankstruktur, mit welcher Daten in der Datenbank gespeichert sind, kann automatisch abhängig von dem jeweils aktuellen Datenmodell erstellt werden. Darüber hinaus ist es möglich, dass die Datenbankstruktur bei einer Änderung des Datenmodells automatisch an dieses geänderte Datenmodell angepasst wird.

Durch die automatische Anpassung der Datenbankstruktur an das jeweils aktuelle Datenmodell können vorteilhafterweise immer Daten entsprechend des aktuellen Datenmodells in der Datenbank abgespeichert oder ausgelesen werden.

Gemäß einer weiteren erfindungsgemäßen Ausführungsform kann ein Zusammenhang zwischen Modellelementen des Datenmodells definiert werden, welcher selbst wiederum ein Element des Datenmodells ist. Dieser Zusammenhang kann über die Schnittstelle der Betriebsmittelverwaltung abgefragt werden.

Darüber hinaus ist es erfindungsgemäß möglich, über die Schnittstelle der Betriebsmittelverwaltung Eigenschaften derjenigen Betriebsmittel abzufragen, welche über einen bestimmten definierten Zusammenhang zusammenhängen.

Durch diese Ausführungsform ist es vorteilhafterweise möglich, Mengen von Eigenschaften für einen bestimmten thematischen Zusammenhang bzw. Kontext über die Schnittstelle der Betriebsmittelverwaltung abzufragen.

Dabei umfasst ein thematischer Zusammenhang thematisch zusammenhängende Merkmale, welche im Model auch unterschiedlichen Betriebsmitteln zugeordnet sein können. Mit anderen Worten stellt ein thematischer Zusammenhang einen Zusammenhang zwischen mehreren Merkmalen her, welche demselben Thema zugeordnet sind, auch wenn diese Merkmale unterschiedlichen Betriebsmitteln zugeordnet sind. Ein thematischer Zusammenhang ist (wie jeder Zusammenhang) selbst ein Element des Datenmodells und kann somit abgefragt werden.

Indem über die insbesondere standardisierte Schnittstelle der Betriebsmittelverwaltung Zusammenhänge abgefragt werden können, ist es vorteilhafterweise möglich, dass Applikationen oder Geräte automatisch über das allgemeingültige Datenmodell konfiguriert werden. Damit ist es erfindungsgemäß möglich, dass ein Wissen über Zusammenhänge (z.B. thematisch zusammenhängende Merkmale) in dem Datenmodell enthalten ist, da jeder Zusammenhang ein Element des Datenmodells ist. Beispielsweise bei einer Fertigung können dann auf Basis des Datenmodells konkrete Werte hinterlegt werden, so dass dann mit diesen Informationen (d.h. Datenmodell und Werten) alle Einstellungen zu einem konkreten Zusammenhang automatisch (ohne manuelle Tätigkeit) durchgeführt werden.

Darüber hinaus können über die Schnittstelle der Betriebsmittelverwaltung auf die Anfrage eines Benutzers oder einer Applikation abhängig von dem Datenmodell Daten ausgegeben werden. Es ist auch möglich, dass über die Schnittstelle der Betriebsmittelverwaltung automatisch abhängig von dem Datenmodell Daten ausgegeben werden, sobald sich diese Daten geändert haben.

Damit ist es möglich, dass der jeweilige Benutzer Daten oder Informationen über ein bestimmtes Element von dem Datenmodell abfragt oder auch nur Autorisierungsdaten abfragt.

Im Rahmen der vorliegenden Erfindung wird auch ein System zur Modellierung von Betriebsmitteln mittels eines Datenmodells bereitgestellt. Dabei umfasst das System Rechenmittel und Speichermittel. Die Rechenmittel sind ausgestaltet, um eine Betriebsmittelverwaltung bereitzustellen, welche wiederum eine Schnittstelle bereitstellt, über die das Datenmodell zugreifbar ist und über die abhängig von dem Datenmodell gespeicherte Daten zugreifbar sind. Die Rechenmittel sind weiter ausgestaltet, um mit Hilfe der Speichermittel das Datenmodell in einem Modellierungswerkzeug zu speichern, über welches die Betriebsmittelverwaltung auf das Datenmodell zugreift. Schließlich sind die Rechenmittel ausgestaltet, um Daten mittels einer Datenbankstruktur, welche von dem Datenmodell abhängt, mit Hilfe der Speichermittel in einer Datenbank zu speichern, auf welche die Betriebsmittelverwaltung zugreift, um Daten in der Datenbank zu speichern oder Daten aus der Datenbank zu lesen. Dabei umfassen die Daten Eigenschaften der Betriebsmittel.

Die Vorteile des erfindungsgemäßen Systems entsprechen im Wesentlichen den Vorteilen des erfindungsgemäßen Verfahrens, welche vorab im Detail ausgeführt worden sind, so dass hier auf eine Wiederholung verzichtet wird.

Des Weiteren beschreibt die vorliegende Erfindung ein Computerprogrammprodukt, insbesondere eine Software, welche man in einen Speicher eines programmierbaren Systems laden kann. Mit diesem Computerprogrammprodukt können alle oder verschiedene vorab beschriebene Ausführungsformen des erfindungsgemäßen Verfahrens ausgeführt werden, wenn das Computerprogrammprodukt in dem System läuft. Dabei benötigt das Computerprogrammprodukt eventuell Programmmittel, z.B. Bibliotheken und Hilfsfunktionen, um die entsprechenden Ausführungsformen des Verfahrens zu realisieren. Mit anderen Worten soll mit dem auf das Computerprogrammprodukt gerichteten Anspruch insbesondere eine Software unter Schutz gestellt werden, mit welcher eine der oben beschriebenen Ausführungsformen des erfindungsgemäßen Verfahrens ausgeführt werden kann bzw. welche diese Ausführungsform ausführt. Dabei kann es sich bei der Software um einen Quellcode (z.B. C++), der noch compiliert und gebunden oder der nur interpretiert werden muss, oder um einen ausführbaren Softwarecode handeln, der zur Ausführung nur noch in die entsprechende Recheneinheit bzw. Steuereinrichtung des Systems zu laden ist.

Schließlich offenbart die vorliegende Erfindung einen elektronisch lesbaren Datenträger, z.B. eine DVD, ein Magnetband, eine Festplatte oder einen USB-Stick, auf welchem elektronisch lesbare Steuerinformationen, insbesondere Software (vgl. oben), gespeichert ist. Wenn diese Steuerinformationen (Software) von dem Datenträger gelesen und in eine Steuereinrichtung bzw. Recheneinheit eines Systems gespeichert werden, können alle erfindungsgemäßen Ausführungsformen des vorab beschriebenen Verfahrens durchgeführt werden.

Durch die Verwendung des allgemeingültigen Datenmodells wird die gesamte Betriebsmittelverwaltung gesteuert, was die Datenhaltung, die Autorisierung und die Benutzeroberfläche bzw. Benutzer-Schnittstelle einschließt. Wenn sich das allgemeingültige Datenmodell ändert, ist vorteilhafterweise keinerlei Programmierung erforderlich, da die dadurch bedingten Änderungen (z. B. Datenbankstruktur) automatisch durchgeführt werden. Durch die erfindungsgemäß bereitgestellten Schnittstellen wird die Erstellung von Applikationen deutlich vereinfacht und standardisiert.

Im Folgenden wird die vorliegende Erfindung anhand erfindungsgemäßer Ausführungsformen mit Bezug zu den Figuren im Detail beschrieben.
In Fig. 1 ist das Zusammenspiel von erfindungsgemäßen Komponenten dargestellt.
In Fig. 2 ist der erfindungsgemäße Import eines Datenmodells dargestellt.
In Fig. 3 ist der erfindungsgemäße Import von Daten dargestellt.
In Fig. 4 ist der erfindungsgemäße Export von Daten dargestellt.
In Fig. 5 ist das erfindungsgemäße Ausgeben von Informationen zu einem bestimmten Element aus dem Datenmodell dargestellt.
In Fig. 6 ist das erfindungsgemäße Ausgeben von bestimmten Daten zu einem Element dargestellt.
In Fig. 7 ist das erfindungsgemäße Speichern von Daten dargestellt.
In Fig. 8 ist das erfindungsgemäße Ausgeben von Merkmalen für einen bestimmten thematischen Kontext dargestellt.
In Fig. 9 ist die erfindungsgemäße Bereitstellung einer Benutzer-Schnittstelle für ein bestimmtes Betriebsmittel dargestellt.
In Fig. 10 ist der erfindungsgemäße Zusammenhang zwischen verschiedenen Betriebsmitteln dargestellt.
In Fig. 11 ist ein erfindungsgemäßes System schematisch dargestellt.

Erfindungsgemäß dient das allgemein gültige Datenmodell der Beschreibung von Betriebsmitteln (Assets), wie z.B. Geräten oder Softwareprodukten. Unter Betriebsmitteln wird dabei zum einen Hardware zum anderen aber auch Software verstanden. Das Datenmodell kann dabei in verschiedene Aspekte unterteilt werden, wie beispielsweise:
- Einen physikalischen Aspekt, welcher z. B. physikalische Merkmale, wie Höhe, Breite, Länge, Bemessungsspannung, umfasst.
- Einen geographischen Aspekt, welcher z. B. geographische Merkmale oder Daten, wie die Adresse eines Standorts des Betriebsmittels, GPS-Daten, umfasst.
- Einen juristischen Aspekt, welcher juristische Merkmale oder Informationen, wie z. B. Informationen bezüglich des Herstellers des Betriebsmittels, des Besitzers des Betriebsmittels, des Betreibers des Betriebsmittels, umfasst.
- Einen kaufmännischen Aspekt, welcher z. B. kaufmännische Merkmale oder Informationen, wie Kosten, Preis des Betriebsmittels (gegebenenfalls mit einer Berechnungsformel), umfasst.
- Einen logistischen Aspekt, welcher z. B. logistische Merkmale oder Informationen, wie einen geplanten Liefertermin des Betriebsmittels ab Werk, eine geplante Ankunftszeit eines Betriebsmittels auf der Baustelle, umfasst.

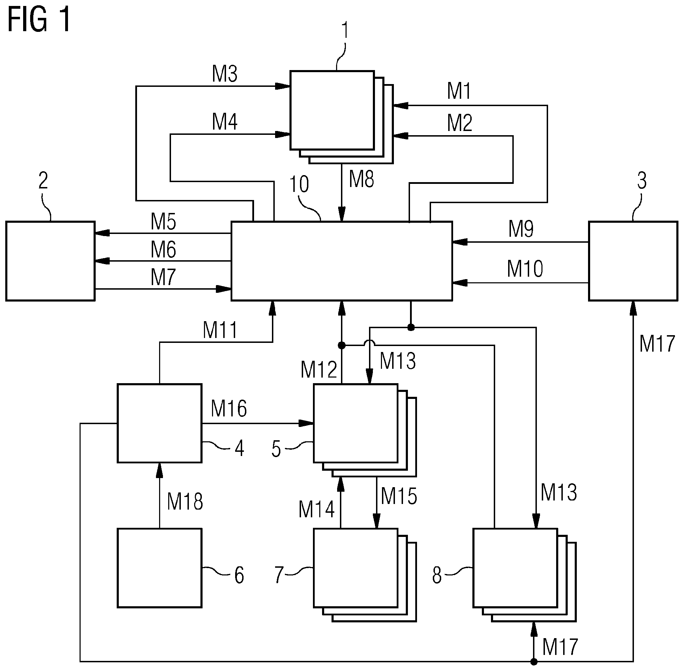

Das allgemein gültige Datenmodell wird mit Hilfe mehrerer Software-Werkzeuge erstellt, welche in Fig. 1 dargestellt sind. Prinzipiell können alle in Fig. 1 dargestellten Komponenten mehrfach vorhanden sein.

Eine wichtige Eigenschaft des Datenmodells sind wiederverwendbare Merkmale, welche in einer eigenen Merkmalsverwaltung 6 definiert und verwaltet werden. Unter einem Merkmal wird dabei eine Eigenschaft eines Betriebsmittels verstanden, welche bei einem konkreten Betriebsmittel einen Wert haben kann. Diese Merkmalsverwaltung 6 ermöglicht es einem Benutzer, neue (bisher nicht definierte) Merkmale zu definieren oder bestehende Merkmale abzufragen. Die Merkmalsverwaltung 6 stellt beispielsweise intelligente Suchmechanismen bereit, um passende Merkmale zu finden, und eine intelligente Dublettenprüfung bereit, um das Erzeugen eines Merkmals zu vermeiden, von welchem bereits ein semantisch identisches Merkmal vorhanden ist.

In einem Modellierungswerkzeug 4 werden die mit der Merkmalsverwaltung 6 erstellten Merkmale zur Beschreibung von Betriebsmitteln und zur Beschreibung von Aspekten bzw. Sichten dieser Betriebsmittel verwendet. Darüber hinaus erzeugt das Modellierungswerkzeug 4 Strukturen für die Betriebsmittel, was gegebenenfalls vorhandene Beziehungen zwischen Betriebsmitteln einschließt. Mit anderen Worten erzeugt das Modellierungswerkzeug 4 das allgemein gültige Datenmodell.

Mit dem allgemeingültigen Datenmodell kann eine Kommunikation zwischen unterschiedlichen Datenquellen 7, 8 bereitgestellt werden. Falls eine solche Datenquelle 8 bereits auf dem allgemeingültigen Datenmodell basiert, können die Daten dieser Datenquelle 8 direkt (d.h. ohne Umwandlung) von einer Betriebsmittelverwaltung 10 verwendet werden. Falls die Datenquelle 7 auf einem anderen Datenmodell arbeitet, muss ein Modellwandler 5 eingesetzt werden, um die Daten aus dem Datenmodell der Datenquelle 7 in das allgemeingültige Datenmodell umzusetzen und umgekehrt. Für die Erstellung entsprechender Transformationsregeln stellt der Modellwandler 5 eine entsprechende Benutzer-Schnittstelle bereit.

Mit anderen Worten werden die Daten einer Datenquelle 7, 8 entweder direkt von dieser Datenquelle 8 an die Betriebsmittelverwaltung 10 ausgegeben oder direkt von der Betriebsmittelverwaltung 10 der Datenquelle 8 zugestellt, wie es mit den Pfeilen M12, M13 in Fig. 1 dargestellt ist. Oder aber die Daten werden von der Datenquelle 7 über den Modellwandler 5 an die Betriebsmittelverwaltung 10 ausgegeben oder aber von der Betriebsmittelverwaltung 10 über den Modellwandler 5 an die Datenquelle 7 ausgegeben, wie es mit den Pfeilen M12 - M15 dargestellt ist. Dabei kann pro umzusetzendem Datenmodell jeweils ein Modellwandler 5 vorhanden sein.

Um Daten für die Betriebsmittel basierend auf dem allgemeingültigen Datenmodell zu speichern, wird eine Datenbank 2 eingesetzt. Diese Datenbank 2 (insbesondere die Datenstruktur dieser Datenbank 2) wird automatisch ausgehend von dem allgemeingültigen Datenmodell aufgebaut. Mit anderen Worten wird der Aufbau der Datenbank abhängig von dem Datenmodell gesteuert. Als Datenbank 2 wird dabei eine so genannte NoSQL-Datenbank bevorzugt, da der Freiheitsgrad beim Aufbau von Strukturen bei einer solchen NoSQL-Datenbank größer ist als bei einer SQL-Datenbank bzw. relationalen Datenbank. Erfindungsgemäß kann aber auch eine SQL-Datenbank (d.h. eine relationale Datenbank) eingesetzt werden.

Die in der Datenbank gespeicherten Daten sollten dem einzelnen Benutzer oder den einzelnen Benutzergruppen so bereitgestellt werden, dass der jeweilige Benutzer bzw. die jeweilige Benutzergruppe nur auf die Menge der Betriebsmittel zugreifen kann, für die der jeweilige Benutzer bzw. die jeweilige Benutzergruppe autorisiert ist. Dazu existiert eine Autorisierungsverwaltung 3, welche die entsprechenden Berechtigungen verwaltet und eine Konfiguration dieser Berechtigungen bzw. Autorisierung ermöglicht. Dabei gilt die erfindungsgemäße Autorisierung auf Elementebene, so dass dem jeweiligen Benutzer bzw. der jeweiligen Benutzergruppe der Zugriff nur auf diejenigen Elemente der Betriebsmittel gewährt wird, für die der jeweilige Benutzer bzw. die jeweilige Benutzergruppe autorisiert ist.

Wenn ein Benutzer beispielsweise nicht autorisiert ist, auf die Elemente eines Betriebsmittels zuzugreifen, welche den Logistikaspekt dieses Betriebsmittels betreffen, dann verbietet die Autorisierungsverwaltung 3 dem Benutzer den Zugriff auf die Elemente bezüglich des Logistikaspekts, obwohl dieser Benutzer für andere Aspekte bzw. Sichten dieses Betriebsmittels autorisiert ist und die den Logistikaspekt des Betriebsmittels betreffenden Elemente des Betriebsmittels in der Datenbank vorhanden sind.

Zur Konfiguration der Autorisierung oder Berechtigungen stellt die Autorisierungsverwaltung 3 eine entsprechende Benutzeroberfläche bereit.

Die vorab genannten Filter zur Einschränkung der Menge der Betriebsmittel und die vorab genannten Sichten zur Einschränkung der Menge der zu einem Betriebsmittel gehörenden Merkmale können zur Autorisierung eingesetzt werden. Abhängig von bestimmten Merkmalen kann die Berechtigung zur Änderung einzelner Daten oder Elemente von Betriebsmitteln durch eine entsprechende Konfiguration innerhalb der Autorisierungsverwaltung 3 bestimmt werden. Ein solches Merkmal kann beispielsweise den Zustand oder die Phase, in welcher sich ein bestimmtes Betriebsmittel aktuell befindet, umfassen. Beispielsweise hat bei der Herstellung eines Betriebsmittels im Normalfall ausschließlich der Hersteller dieses Betriebsmittels die Berechtigung zum Zugriff auf die Daten dieses Betriebsmittels. Dagegen hat während einer Betriebsphase desselben Betriebsmittels zumindest zusätzlich das Wartungspersonal und meist auch der Betreiber die Berechtigung zum Zugriff auf dieses Betriebsmittel. Ein Datenelement für die aktuelle Phase, in welcher sich das jeweilige Betriebsmittel befindet, kann dabei für die Konfiguration einer Schreibberechtigung auf die Daten dieses Betriebsmittels eingesetzt werden.

Die Basis für eine Konfiguration einer Autorisierung mittels der Autorisierungsverwaltung 3 ist das allgemein gültige Datenmodell.

Eine Konfiguration der Autorisierung kann als ein Vertrag zwischen den Benutzern angesehen werden, welche (zumindest teilweise) Zugriff auf die Daten eines Betriebsmittels haben. Im Rahmen dieser Konfiguration bzw. dieses Vertrages legen die Benutzer (genauer die Eigentümer des jeweiligen Teilmodells oder der Daten) fest, welcher Benutzer wofür Schreib- und/oder Leserechte besitzt. Die Eigentümer sind dabei spezielle Benutzer, welche die Hoheit über das jeweilige Teilmodell oder die jeweiligen konkreten Daten bzw. Werte haben. Dabei ist es möglich, dass das Modell oder ein Teil des Modells bzw. Teilmodells andere Eigentümer besitzt als die Daten oder Werte, welche gemäß dieses Modells oder Teilmodells gespeichert sind.

Diesbezüglich ist es vorteilhaft, wenn die Konfiguration so geschützt wird, dass sie nicht einfach verändert werden kann, was beispielsweise mittels einer Blockchain-Technologie realisiert werden kann. Bei der Konfiguration werden Filter eingesetzt, um die Menge der Betriebsmittel und die Merkmale der Betriebsmittel abhängig von den Zugriffsrechten des jeweiligen Benutzers und abhängig vom Zustand der Betriebsmittel zu filtern, so dass jeder Benutzer abhängig vom Zustand der Betriebsmittel nur Zugriff auf diejenigen Betriebsmittel und auf diejenigen Merkmale der Betriebsmittel hat, für die er auch berechtigt ist.

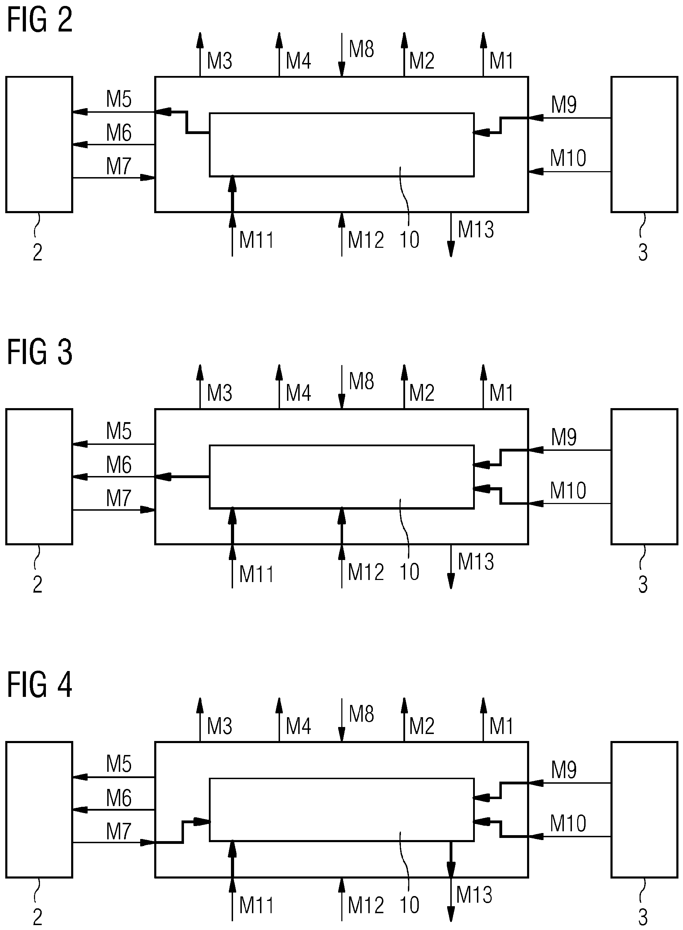

Mit dem allgemeingültigen Datenmodell ist eine standardisierte Nutzung von Daten von Betriebsmitteln, was die entsprechende Semantik einschließt, durch eine beliebige Applikation 1 möglich. Dazu stellt die erfindungsgemäße Betriebsmittelverwaltung 10 die notwendigen standardisierten Schnittstellen bereit, welche im Folgenden mit Bezug zu den Figuren 2-9 diskutiert werden.

In Fig. 2 ist die erfindungsgemäße Eingabe eines Datenmodells schematisch dargestellt.

Die Betriebsmittelverwaltung 10 bietet Schnittstellen M5, M9, M11 an, um automatisch eine Datenbankstruktur auf der Basis des allgemeingültigen Datenmodells abhängig von den Zugriffsrechten des Benutzers aufzubauen. In einem ersten Schritt wird dazu das Datenmodell über die Schnittstelle M11 eingelesen. Anschließend wird das eingelesen Datenmodell in einem zweiten Schritt validiert, wobei überprüft wird, ob die Regeln für den Aufbau des Datenmodells eingehalten wurden und das Datenmodell damit auch für die Erzeugung der Datenbankstruktur geeignet ist. Wenn das Datenmodell erfolgreich geprüft wurde, wird die Datenbankstruktur entweder automatisch neu abhängig von dem Datenmodell erzeugt oder automatisch an das aktuelle Datenmodell angepasst. Falls mit der Änderung der Datenbankstruktur umfangreiche Strukturänderungen einhergehen, wird automatisch eine Datenmigration der in der alten Datenbankstruktur vorliegenden Daten in Daten gemäß der neuen Datenbankstruktur vorgenommen. Diese Datenmigration kann durch die Betriebsmittelverwaltung 10 unterstützt werden.

Sobald die Datenbankstruktur entsprechend erstellt worden ist, können Daten in der Datenbank 2 gespeichert werden. Die Betriebsmittelverwaltung 10 bietet dazu eine Eingabemöglichkeit (inklusive Importmöglichkeit) für Daten an, welche auf dem allgemeingültigen Datenmodell basieren, wie es in Fig. 3 dargestellt ist. Diese Eingabe oder dieser Import kann entweder automatisch über die in Fig. 3 dargestellten Schnittstellen M6, M9-M12 erfolgen. Es reicht dabei aus, wenn zu einer Kennung eines Datenelements eines Betriebsmittels der zugehörige konkrete Wert (oder zugehörige mehrere Werte) übergeben wird (werden). Alle anderen Informationen zu einem Datenelement, wie beispielsweise die bevorzugte Benennung oder eine Beschreibung, sind dabei nur optional, da sie jederzeit aus dem Datenmodell entnommen werden können.

Vor einer Eingabe oder einem Import der Daten wird überprüft, ob die Datenstruktur der Daten zu dem aktuellen allgemeingültigen Datenmodell passt. Nur wenn dies der Fall ist und wenn für die zugeordnete Datenquelle die in der Autorisierungsverwaltung 3 hinterlegten Berechtigungen für den ausführenden Benutzer ausreichen, werden die zu importierenden Daten in die Datenbank 2 übernommen. Alle anderen Daten, bei denen dies nicht der Fall ist, werden bei dem Import der Daten ignoriert.

Beispielsweise kann die Menge der Betriebsmittel, für welche eine bestimmte Benutzergruppe exklusiv autorisiert ist, in einem eigenen Vertrag hinterlegt sein, auf welchen nur diese bestimmte Benutzergruppe (d.h. die Vertragspartner) Zugriff hat, sobald deren Autorisierung benötigt wird. D.h. ein solcher Vertrag könnte mittels Blockchain-Technologie geschützt sein, wie es vorab beschrieben ist. Falls mehrere Benutzergruppen für bestimmte Betriebsmittel autorisiert sind, kann dies mit Hilfe von entsprechenden unterschiedlichen Datenquellen realisiert werden, welche mit der Betriebsmittelverwaltung 10 auf die oben beschriebene Art und Weise verbunden sind. In der Autorisierungsverwaltung 3 kann dann auf Basis des allgemeingültigen Datenmodells durch entsprechende Filter konfiguriert werden, welche Menge der Betriebsmittel mit einer bestimmten Datenquelle ausgetauscht werden soll. Darüber hinaus ist es möglich, die Menge der Daten der Betriebsmittel, die mit einer bestimmten Datenquelle ausgetauscht werden sollen, abhängig von einer entsprechenden Sicht festzulegen. In einer solchen Sicht kann auch festgelegt werden, welche Daten oder Elemente einer bestimmten Datenquelle veränderbar sind.

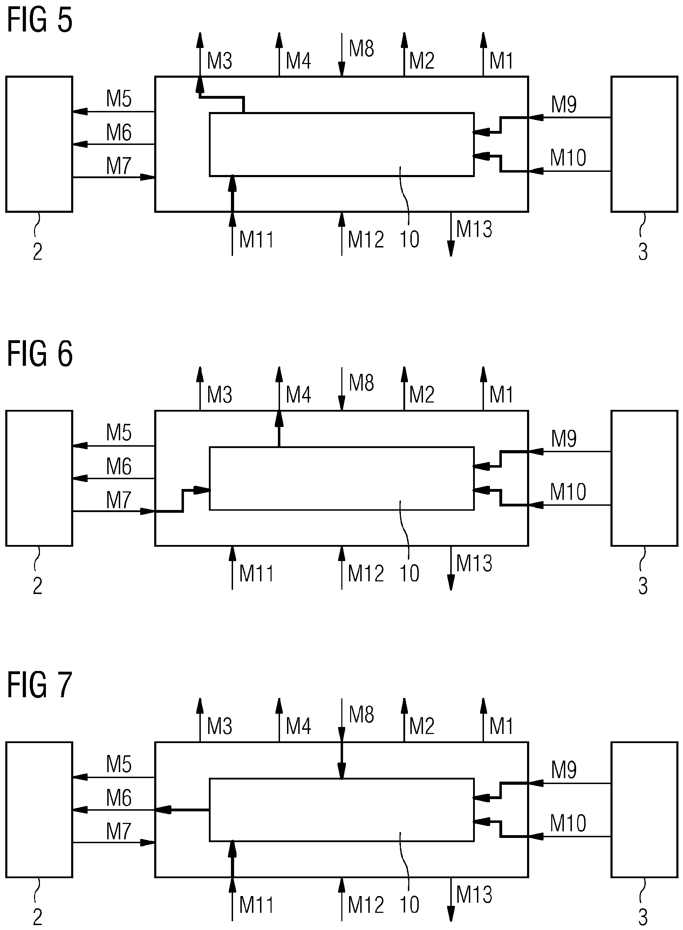

Sobald Daten in der Datenbank 2 gespeichert sind, können diese Daten auf der Grundlage des allgemeingültigen Datenmodells einer anderen Applikation 1, 7, 8 oder mehreren anderen Applikationen 1, 7, 8 zur Verfügung gestellt werden. Dazu werden die Schnittstellen M4, M7, M9, M10, M11 und M13 der Betriebsmittelverwaltung 10 eingesetzt, wie es in den Figuren 4 und 6 dargestellt ist.

Wie bei der Eingabe (inklusive Import) der Daten (siehe Fig. 3) werden dabei nur die Kennungen der Datenelemente mit den zugehörigen konkreten Werten übergeben. Darüber hinaus werden nur diejenigen Datenelemente übergeben, für welche die jeweilige Applikation entsprechende Zugriffsrechte besitzt, welche in der Autorisierungsverwaltung 3 für die jeweilige Applikation in einer zugehörigen Konfiguration hinterlegt sind. Dabei können die Zugriffsrechte abhängig von einer Menge der Betriebsmittel und abhängig von Sichten auf Datenelemente der Betriebsmittel eingestellt werden.

Informationen oder Werte zu Elementen von Betriebsmitteln gemäß dem allgemeingültigen Datenmodell werden von der Betriebsmittelverwaltung 10 mittels der Schnittstellen M9 - M11 über eine standardisierte Schnittstelle M3 anderen Applikationen 1 zur Verfügung gestellt, wie es in Fig. 5 dargestellt ist. Dadurch ist es vorteilhafterweise möglich, dass das allgemeingültige Datenmodell das Verhalten anderer Applikationen steuert oder beeinflusst. Dabei ist es beispielsweise möglich, dass Feldbezeichnungen und Feldbeschreibungen aus dem allgemeingültigen Datenmodell in der Sprache bereitgestellt werden, in der die jeweilige Applikation 1 arbeitet oder die in der jeweiligen Applikation eingestellt ist. Falls eine Information in der gewünschten Sprache nicht vorliegt, wird diese Information in einer Standardsprache (z. B. Englisch) bereitgestellt. Über die Merkmalsverwaltung 6 und das Modellierungswerkzeug 4 können Informationen in einer bestimmten Sprache ergänzt werden, ohne dass dazu eine Programmierung erforderlich ist.

Auch in diesem Fall werden nur Informationen zu Elementen übergeben, wenn die jeweilige Applikation gemäß der Konfiguration in der Autorisierungsverwaltung 3 die entsprechenden Zugriffsrechte aufweist (d.h. für den die Applikation bedienenden Benutzer). Dabei gehören zu den übergebenen Informationen auch die in der Autorisierungsverwaltung 3 hinterlegten Zugriffsrechte, so dass beispielsweise auch die Information übergeben werden kann, ob ein bestimmter Benutzer einen bestimmten Wert ändern oder lesen darf.

Darüber hinaus stellt die Betriebsmittelverwaltung 10 über ihre Schnittstellen M7, M9, M10 Werte der Datenelemente zu einem oder zu mehreren Betriebsmitteln über eine standardisierte Schnittstelle M4 anderen Applikationen 1 zur Verfügung gestellt, wie es in Fig. 6 dargestellt ist. Auch in diesem Fall werden nur Werte zu Elementen von Betriebsmitteln übergeben, wenn die jeweilige Applikation (d.h. der die Applikation einsetzende Benutzer) gemäß der Konfiguration in der Autorisierungsverwaltung 3 die entsprechenden Zugriffsrechte aufweist.

Darüber hinaus können andere Applikationen 1 auf der Grundlage des allgemeingültigen Datenmodells neue Betriebsmittel anlegen oder Daten bereits vorhandener Betriebsmittel verändern oder ergänzen. Dazu werden die Daten von neuen Betriebsmitteln oder die geänderten Daten von bereits vorhandenen Betriebsmitteln zur Speicherung in der Datenbank 2 über eine standardisierte auf dem allgemeingültigen Datenmodell basierende Schnittstelle M8 an die Betriebsmittelverwaltung 10 übergeben, wobei zur Verarbeitung dieser Daten die Schnittstellen M6, M9-M11 der Betriebsmittelverwaltung 10 eingesetzt werden.

Auch in diesem Fall werden nur Werte zu Elementen von Betriebsmitteln gespeichert, wenn die jeweilige Applikation (d.h. der die Applikation einsetzende Benutzer) gemäß der Konfiguration in der Autorisierungsverwaltung 3 die entsprechenden Zugriffsrechte aufweist. Falls Daten gespeichert werden sollen, für die die Applikation nicht über die erforderlichen Zugriffsrechte verfügt, wird eine entsprechende Fehlermeldung an die Applikation ausgegeben.

Da eine Applikation 1 erfindungsgemäß über die standardisierte Schnittstelle M4 beliebige Daten lesen über die standardisierte Schnittstelle M8 beliebige Daten erzeugen oder ändern kann, kann die Applikation 1 auf eine eigene Datenhaltung verzichten und stattdessen vorteilhafterweise die erfindungsgemäße Datenhaltung über die Betriebsmittelverwaltung 10 (und damit die Datenbank 2) einsetzen.

Erfindungsgemäß können mit dem allgemeingültigen Datenmodell Zusammenhänge zwischen einzelnen Modellelementen (z. B. Betriebsmitteln oder Elementen von Betriebsmitteln) modelliert werden.

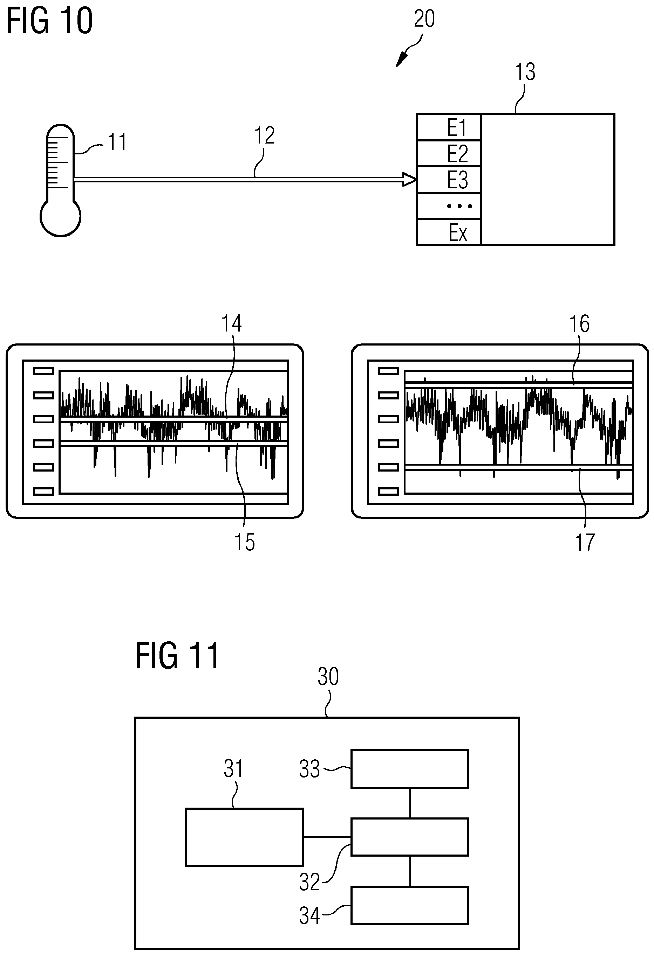

Ein Beispiel für einen solchen Zusammenhang 20 ist in Fig. 10 dargestellt.

Der in Fig. 10 dargestellte Zusammenhang 20 verknüpft einen Temperatursensor 11 oder die Messwerte dieses Temperatursensors 11 mit dem entsprechenden Eingang E3 einer Vorrichtung 13, welche diese Messwerte entgegennimmt und über ein Kabel 12 mit dem Temperatursensor 11 verbunden ist. Darüber hinaus umfasst die Zuordnung 20 eine obere Warnschwelle 14 und eine untere Warnschwelle 15 sowie eine obere Alarmschwelle 16 und eine untere Alarmschwelle 17 desjenigen Betriebsmittels, in welches der Temperatursensor 11 eingebaut ist.

Durch das allgemeingültige Datenmodell können Zusammenhänge 20 wiederverwendet werden. Daher ist es möglich, dass sich Applikationen auf bestimmte Kombinationen solcher Zusammenhänge spezialisieren.

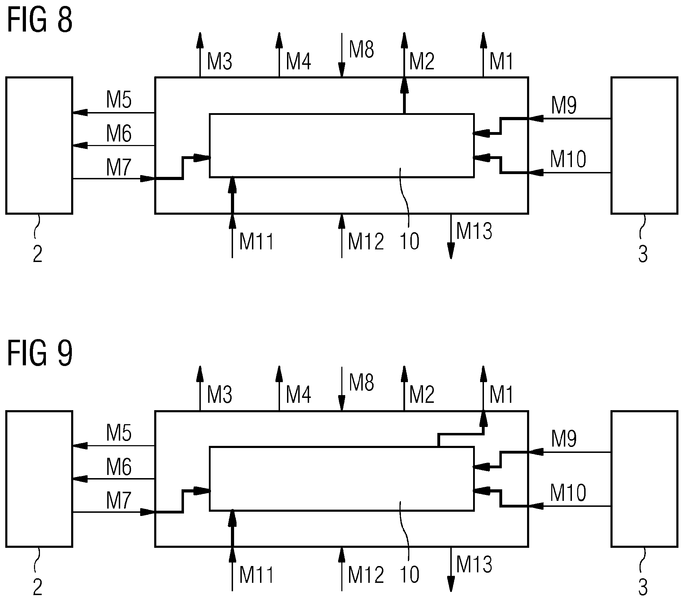

Die Betriebsmittelverwaltung 10 stellt den Applikationen eine standardisierte auf dem allgemeingültigen Datenmodell basierende Schnittstelle M2 bereit, über welche diese Zusammenhänge 20 abgefragt werden können, wobei zur Bereitstellung dieser Zusammenhänge die Schnittstellen M7, M9-M11 der Betriebsmittelverwaltung 10 eingesetzt werden, wie es in Fig. 8 dargestellt ist. Damit können Applikationen 1 automatisch über das allgemeingültige Datenmodell konfiguriert werden. Für eine entsprechende Konfiguration muss die Applikation 1 über die Schnittstelle M2 lediglich die Daten für den entsprechenden Zusammenhang 20 abfragen.

Auch in diesem Fall können die Daten für einen bestimmten Zusammenhang 20 nur dann über die Schnittstelle M2 ermittelt werden, wenn die jeweilige Applikation (d.h. der die Applikation einsetzende Benutzer) gemäß der Konfiguration in der Autorisierungsverwaltung 3 die entsprechenden Zugriffsrechte aufweist.

Darüber hinaus ist die Betriebsmittelverwaltung 10 in der Lage, eine Benutzer-Schnittstelle für eine bestimmte Menge von Betriebsmitteln basierend auf dem allgemeingültigen Datenmodell und für einen bestimmten Benutzer über eine standardisierte Schnittstelle M1 der Betriebsmittelverwaltung 10 bereitzustellen, wobei zur Bereitstellung dieser Benutzer-Schnittstelle die Schnittstellen M7, M9-M11 der Betriebsmittelverwaltung 10 eingesetzt werden, wie es in Fig. 9 dargestellt ist. Dabei werden die für die jeweilige Applikation (d.h. den die Applikation einsetzenden Benutzer) gemäß der Konfiguration in der Autorisierungsverwaltung 3 entsprechenden Zugriffsrechte berücksichtigt, so dass der jeweilige Benutzer über die bereitgestellte Benutzer-Schnittstelle nur Informationen bezüglich Betriebsmitteln abfragen oder ändern kann, für welche er die entsprechenden Zugriffsrechte besitzt.

Mit der standardisierten Schnittstelle M1 der Betriebsmittelverwaltung 10 können Benutzer-Schnittstellen für verschiedene Zwecke bereitgestellt werden. Beispielsweise kann eine Benutzer-Schnittstelle mit Filterkriterien zur Ermittlung von Betriebsmitteln bereitgestellt werden. Es ist aber auch möglich, damit eine Benutzer-Schnittstelle bereitzustellen, über welche der jeweilige Benutzer alle Details in Erfahrung bringen und bearbeiten kann, für welche der jeweilige Benutzer zu einem bestimmten Betriebsmittel die entsprechenden Zugriffsrechte besitzt.

Im Folgenden werden die in Fig. 1 dargestellten Schnittstellen (Pfeile) im Detail erläutert.

Mit Hilfe der standardisierten Schnittstelle M1 werden von der Betriebsmittelverwaltung 10 Benutzer-Schnittstellen bzw. Benutzeroberflächen für verschiedene Zwecke bereitgestellt, über welche der jeweilige Benutzer alle Details in Erfahrung bringen und bearbeiten kann, für welche der jeweilige Benutzer zu einem bestimmten Betriebsmittel die entsprechenden Zugriffsrechte besitzt.

Mit Hilfe der standardisierten Schnittstelle M2 können Merkmale (z.B. Eigenschaften, Daten) für einen bestimmten Zusammenhang (z.B. thematischen Kontext) über die Betriebsmittelverwaltung 10 abgefragt werden, so dass die jeweilige Applikation (d.h. der die Applikation einsetzende Benutzer) alle Details zu einem Zusammenhang in Erfahrung bringen kann, wenn der jeweilige Benutzer die entsprechenden Zugriffsrechte besitzt.

Über die standardisierte Schnittstelle M3 können Informationen für ein bestimmtes Element (insbesondere Modellierungsinformation der Betriebsmittel) von dem Datenmodell über die Betriebsmittelverwaltung 10 abgefragt werden, wenn der jeweilige Benutzer die entsprechenden Zugriffsrechte besitzt.

Über die standardisierte Schnittstelle M4 können die Daten der Betriebsmittel über die Betriebsmittelverwaltung 10 abgefragt werden, wenn die entsprechende Berechtigung vorliegt.

Mit Hilfe der Schnittstelle M5 kann eine Datenbankstruktur der Datenbank 2 abhängig von dem aktuellen Datenmodell erzeugt oder geändert werden, wenn der jeweilige Benutzer die entsprechenden Zugriffsrechte besitzt.

Mit Hilfe der Schnittstelle M6 können Daten in der Datenbank 2 abhängig von dem aktuellen Datenmodell erzeugt oder geändert werden, wenn der jeweilige Benutzer die entsprechenden Zugriffsrechte besitzt.

Mit Hilfe der Schnittstelle M7 können Daten von der Datenbank 2 abhängig von dem Datenmodell abgefragt werden, wenn der jeweilige Benutzer die entsprechenden Zugriffsrechte besitzt.

Über die standardisierte Schnittstelle M8 können Daten der Betriebsmittel über die Betriebsmittelverwaltung 10 gespeichert werden.

Über die Schnittstelle M9 können Berechtigungen für einen bestimmten Benutzer oder eine bestimmte Benutzergruppe von der Autorisierungsverwaltung 3 ermittelt werden. Mit diesen Berechtigungen wird die Menge der Betriebsmittel bestimmt, für die der jeweilige Benutzer bzw. die jeweilige Benutzergruppe eine Zugriffsberechtigung besitzt.

Über die Schnittstelle M10 können über die Autorisierungsverwaltung 3 Sichten ermittelt werden, welche einem bestimmten Benutzer oder einer bestimmten Benutzergruppe zugeordnet sind und für welche der bestimmte Benutzer oder die bestimmte Benutzergruppe Zugriffsrechte aufweist. Mit anderen Worten bestimmt die Schnittstelle M10 diejenigen Merkmale (von Betriebsmitteln), für die der jeweilige Benutzer bzw. die jeweilige Benutzergruppe eine Zugriffsberechtigung nur lesend oder auch schreibend besitzt.

Mit Hilfe der Schnittstellen M11, M16, M17 kann das gesamte Datenmodell oder können Teile des Datenmodells abgefragt werden, wobei das Abfragen das Bereitstellen des abgefragten Datenmodells oder der abgefragten Teile des Datenmodells umfasst.

Über die Schnittstelle M12 können Daten basierend auf dem aktuellen Datenmodell von der entsprechenden Datenquelle 7, 8 abgefragt werden.

Über die Schnittstelle M13 können Daten basierend auf dem aktuellen Datenmodell von der Betriebsmittelverwaltung 10 abgefragt (inklusive der Bereitstellung der abgefragten Daten) werden, um sie in der entsprechenden Datenquelle 7,8 zu speichern. Mit anderen Worten stellt diese Schnittstelle M13 die Möglichkeit bereit, über die Betriebsmittelverwaltung 10 Daten in der entsprechenden Datenquelle 7, 8 zu erzeugen, zu ändern oder zu löschen.

Über die Schnittstelle M14 können Daten von einer Datenquelle 7 abgefragt werden, welche ein eigenes Datenmodell einsetzt, das sich von dem aktuellen allgemeingültigen Datenmodell unterscheidet. Dabei umfasst das Abfragen das Bereitstellen der abgefragten Daten.

Über die Schnittstelle M15 können Daten in einer Datenquelle 7 gespeichert werden, welche ein eigenes Datenmodell einsetzt, das sich von dem aktuellen allgemeingültigen Datenmodell unterscheidet.

Mit Hilfe der Schnittstelle M18 können Merkmale mit allen Informationen zur Wiederverwendung von der Merkmalsverwaltung 6 abgefragt werden, wobei das Abfragen das Bereitstellen der abgefragten Merkmale mit allen Informationen umfasst.

Im Folgenden werden Funktionen oder Schnittstellen beschrieben, welche direkt über die standardisierte Benutzer-Schnittstelle M1-M4, M8 der Betriebsmittelverwaltung 10 oder eine andere Schnittstelle oder eine Kombination von Schnittstellen bereitgestellt werden. Dabei werden bei der Bereitstellung dieser Funktionen oder Schnittstellen und dem Einsatz der dazu notwendigen Schnittstellen Berechtigungen für den jeweiligen Benutzer berücksichtigt, welche in der Autorisierungsverwaltung 3 konfiguriert sind.
- Eine Funktion, mit welcher ein Datenmodell teilweise oder vollständig importiert werden kann, um das allgemeingültige Datenmodell abhängig von einem (teilweise) importierten Datenmodell zu erzeugen oder zu aktualisieren. Diese Funktion wird von der Betriebsmittelverwaltung 10 bereitgestellt.
- Eine Funktion, mit welcher Daten von Betriebsmitteln abhängig von dem allgemeingültigen Datenmodell importiert oder aktualisiert werden können. Diese Funktion wird von der Betriebsmittelverwaltung 10 bereitgestellt.
- Eine Benutzer-Schnittstelle bzw. Benutzeroberfläche für eine bestimmte Menge von Betriebsmitteln abhängig von den Berechtigungen des aktuellen Benutzers wird bereitgestellt. Die bereitgestellte Benutzer-Schnittstelle ist verfügbar, sobald das allgemeingültige Datenmodell erzeugt oder aktualisiert ist, wobei für die Applikationen bzw. Benutzer, welchen diese bereitgestellte Benutzer-Schnittstelle bereitgestellt wird, (außer für die Einbettung der Benutzer-Schnittstelle) keine Programmierung oder Konfigurierung notwendig ist, um auf die Benutzer-Schnittstelle zuzugreifen oder mit dieser Benutzer-Schnittstelle zu arbeiten. Über die bereitgestellte Benutzer-Schnittstelle können über die Betriebsmittelverwaltung 10 entsprechende Daten direkt abgefragt oder gespeichert werden. Diese Benutzer-Schnittstelle wird von der Betriebsmittelverwaltung 10 für alle Benutzer bereitgestellt.
- Eine Benutzer-Schnittstelle bzw. Benutzeroberfläche, um abhängig von dem allgemeingültigen Datenmodell Filter zu erzeugen, um die Zugriffsrechte auf Betriebsmittel für einen bestimmten Benutzer oder eine bestimmte Benutzergruppe einzustellen. Dabei wird mittels der Filter die Menge der Betriebsmittel bereitgestellt, für die der jeweilige Benutzer oder die jeweilige Benutzergruppe Zugriffsrechte besitzt. Diese Benutzer-Schnittstelle wird von der Autorisierungsverwaltung 3 im Wesentlichen der Benutzergruppe der Autorisierungs-Administratoren bereitgestellt.
- Eine Benutzer-Schnittstelle bzw. Benutzeroberfläche, um Sichten auf eine bestimmte Menge der Betriebsmittel abhängig von dem allgemeingültigen Datenmodell für einen bestimmten Benutzer oder für eine bestimmte Benutzergruppe zu konfigurieren, indem bestimmte Strukturelemente des allgemeingültigen Datenmodells der jeweiligen Sicht zugeordnet oder nicht zugeordnet werden und indem entsprechende Zugriffsrechte eingestellt werden. Die Sichten werden mit Hilfe von Filtern erstellt, welche die Merkmale von Betriebsmitteln bereitstellen, für die der jeweilige Benutzer oder die jeweilige Benutzergruppe Zugriffsrechte besitzt. Diese Benutzer-Schnittstelle wird von der Autorisierungsverwaltung 3 im Wesentlichen der Benutzergruppe der Autorisierungs-Administratoren bereitgestellt.
- Bei einer bereitgestellten Benutzer-Schnittstelle bzw. Benutzeroberfläche erhalten Benutzer oder Benutzergruppen nur auf diejenigen Teile des allgemeingültigen Datenmodells Zugriff, für welche sie durch die Autorisierungsverwaltung 3 berechtigt wurden. Darüber hinaus darf ein bestimmter Benutzer oder eine bestimmte Benutzergruppe nur diejenigen Daten bearbeiten, wenn sie dafür durch die entsprechende Konfiguration der Autorisierungsverwaltung 3 berechtigt ist. Eine solche Benutzer-Schnittstelle wird von der Betriebsmittelverwaltung 10 allen Benutzern bereitgestellt.
- Zumindest eine Schnittstelle, damit einem Benutzer oder einer Benutzergruppe diejenigen Daten bereitgestellt werden, für welche der Benutzer bzw. die Benutzergruppe gemäß der Konfiguration der Autorisierungsverwaltung eine Berechtigung besitzt. Z.B. kann ein bestimmter Benutzer oder eine bestimmte Benutzergruppe auf eine bestimmte Menge von Eigenschaften einer Gruppe von Betriebsmitteln abhängig von einer Sicht auf Betriebsmittel, welche in der Autorisierungsverwaltung modelliert ist, Zugriff besitzen. Diese zumindest eine Schnittstelle wird von der Betriebsmittelverwaltung 10 im Wesentlichen der Benutzergruppe der Entwickler bereitgestellt.

- Zumindest eine Schnittstelle, um bestimmte Daten abhängig von dem allgemeingültigen Datenmodell in die Datenbank 2 zu schreiben. Beispielsweise kann mit einer solchen Schnittstelle ein bestimmter Wert (z.B. 50° C) für ein Merkmal (Eigenschaft, Attribut) eines bestimmten Betriebsmittels, welches durch ein bestimmtes Merkmal (z.B. Seriennummer = 1234567890) des Betriebsmittels identifiziert wird, in die Datenbank 2 geschrieben werden. Das Betriebsmittel und das zu setzende Merkmal des Betriebsmittels werden dabei derart identifiziert, dass das bestimmte Betriebsmittel und das bestimmte Merkmal innerhalb des (verzweigten) allgemeingültigen Modells identifiziert werden können. Diese zumindest eine Schnittstelle wird von der Betriebsmittelverwaltung 10 im Wesentlichen der Benutzergruppe der Entwickler bereitgestellt.
- Zumindest eine Schnittstelle, um spezifische Information (z.B. den bevorzugten Namen des Betriebsmittels, eine Beschreibung des Betriebsmittels, die Bauteilgruppe des Betriebsmittels) für mindestens ein Strukturelement eines Betriebsmittels aus dem allgemeingültigen Datenmodell lesen zu können. Diese Information kann dann in einer anderen Applikation eingesetzt werden, um über die Schnittstelle dieser Applikation eine Bezeichnung oder einen Hinweis über das entsprechende Betriebsmittel ausgeben zu können. Diese zumindest eine Schnittstelle wird von der Betriebsmittelverwaltung 10 im Wesentlichen der Benutzergruppe der Entwickler bereitgestellt.
- Zumindest eine Schnittstelle, um eine Menge von Eigenschaften oder Merkmale für einen bestimmten thematischen Zusammenhang lesen zu können. Z.B. kann eine solche Menge alle Eigenschaften und Merkmale umfassen, welche mit dem Messen einer Temperatur in Zusammenhang stehen, wie z.B. der messende Temperatursensor, abgespeicherte Messwerte, Warnschwellenwerte und Alarmschwellenwerte. Diese zumindest eine Schnittstelle wird von der Betriebsmittelverwaltung 10 im Wesentlichen der Benutzergruppe der Entwickler bereitgestellt.
- Zumindest eine Schnittstelle, um eine bestimmte Schnittstelle für einen bestimmten Benutzer bzw. Applikation (z.B. den aktuellen Benutzer bzw. die aktuelle Applikation) abhängig von der in der Autorisierungsverwaltung 3 gespeicherten Konfiguration bereitzustellen. Diese bestimmte Schnittstelle, welche von der zumindest einen Schnittstelle bereitgestellt wird, kann dann in die jeweilige Applikation eingebettet werden. Diese zumindest eine Schnittstelle wird von der Betriebsmittelverwaltung 10 im Wesentlichen der Benutzergruppe der Entwickler bereitgestellt.

Fig. 11 zeigt ein erfindungsgemäßes System 30 zur Modellierung von Betriebsmitteln 11, 13 mittels eines standardisierten Datenmodells.

Das System 30 umfasst Rechenmittel 32 und Speichermittel 31. Die Rechenmittel 32 sind ausgestaltet, um eine Betriebsmittelverwaltung 10 bereitzustellen, welche ihrerseits die Schnittstelle 33 bzw. die Schnittstellen M1-M4, M8 bereitstellt, über die auf das Datenmodell zugegriffen werden kann und über die abhängig von dem Datenmodell auf gespeicherte Daten zugegriffen werden kann. Darüber hinaus kann die Betriebsmittelverwaltung 10 eine weitere Schnittstelle 34 zu beliebigen anderen Systemen bereitstellen. Über diese weitere Schnittstelle 34 kann beispielsweise ein Zugriff auf Basis gesicherterer Verträge (z.B. mittels Blockchain-Technologie) im Rahmen einer Autorisierung erfolgen. Mittels der Speichermittel 31 wird das Datenmodell in einem Modellierungswerkzeug gespeichert, über welches die Betriebsmittelverwaltung auf das Datenmodell zugreifen kann. Daten werden mittels einer Datenbankstruktur, welche von dem Datenmodell abhängt, mit Hilfe der Speichermittel 31 in einer Datenbank 2 gespeichert, auf welche die Betriebsmittelverwaltung 10 zugreift, um Daten in der Datenbank zu speichern oder Daten aus der Datenbank 2 zu lesen. Dabei umfassen die Daten Eigenschaften der Betriebsmittel 11, 13.

## Patentansprüche

1. Verfahren zur Modellierung von Betriebsmitteln (11, 13) mittels eines Datenmodells,
wobei eine Betriebsmittelverwaltung (10) eine Schnittstelle (M1-M4, M8) bereitstellt, über welche das Datenmodell zugreifbar ist und über welche abhängig von dem Datenmodell gespeicherte Daten zugreifbar sind,
wobei das Datenmodell in einem Modellierungswerkzeug (4) gespeichert ist, über welches die Betriebsmittelverwaltung (10) auf das Datenmodell zugreift,
wobei Daten mittels einer Datenbankstruktur, welche von dem Datenmodell abhängt, in einer Datenbank (2) gespeichert werden, auf welche die Betriebsmittelverwaltung (10) zugreift, um Daten in der Datenbank (2) zu speichern oder Daten aus der Datenbank (2) zu lesen, wobei die Daten Eigenschaften der Betriebsmittel (11, 13) umfassen.

2. Verfahren nach Anspruch 1,
**dadurch gekennzeichnet,**
**dass** das Datenmodell die Semantik, die Syntax und den Kontext definiert, womit über die Schnittstelle (M1-M4, M8) der Betriebsmittelverwaltung (10) auf das Datenmodell und auf die abhängig von dem Datenmodell gespeicherten Daten zugegriffen wird.

3. Verfahren nach Anspruch 1 oder 2,
**dadurch gekennzeichnet,**
**dass** eine Autorisierungsverwaltung (3) bereitgestellt wird, welche auf Basis des Datenmodells durch entsprechende Filter eine Berechtigung eines bestimmten Benutzers (1) bezüglich bestimmter in der Datenbank (2) gespeicherter Daten und bestimmter Elemente des Datenmodells bestimmt, und
**dass** der Zugriff über die Schnittstelle (M1-M4, M8) der Betriebsmittelverwaltung (10) auf das Datenmodell und auf die abhängig von dem Datenmodell gespeicherten Daten abhängig von der Autorisierungsverwaltung (3) erfolgt.

4. Verfahren nach Anspruch 3,
**dadurch gekennzeichnet,**
**dass** die Autorisierungsverwaltung (3) die Berechtigung bezüglich Daten eines der Betriebsmittel (11, 13) abhängig von einer Sicht auf das Betriebsmittel (11; 13) und/oder abhängig von einem aktuellen Zustand des Betriebsmittels (11; 13) bestimmt.

5. Verfahren nach einem der vorhergehenden Ansprüche,
**dadurch gekennzeichnet,**
**dass** für ein bestimmtes der Betriebsmittel (11, 13) abhängig von einer Sicht auf dieses Betriebsmittel (11; 13) über die Schnittstelle (M1) eine Benutzer-Schnittstelle abhängig von dem Datenmodell bereitgestellt wird.

6. Verfahren nach Anspruch 5 und Anspruch 3 oder 4,
**dadurch gekennzeichnet,**
**dass** die Benutzer-Schnittstelle für einen bestimmten Benutzer bereitgestellt wird, indem die Bereitstellung der Benutzer-Schnittstelle abhängig von der für diesen Benutzer durch die Autorisierungsverwaltung (3) bestimmten Berechtigung erfolgt.

7. Verfahren nach einem der vorhergehenden Ansprüche,
**dadurch gekennzeichnet,**
**dass** eine Merkmalsverwaltung (6) Merkmale verwaltet, welche jeweils Eigenschaften mindestens eines der Betriebsmittel (11; 13) und Sichten auf das mindestens eine Betriebsmittel (11; 13) definieren,
**dass** die Merkmalsverwaltung (6) eine Suche nach einem bestimmten Merkmal bereitstellt, und/oder
**dass** die Merkmalsverwaltung (6) ausgestaltet ist, um ein neues Merkmal zu erzeugen.

8. Verfahren nach einem der vorhergehenden Ansprüche,
**dadurch gekennzeichnet,**
**dass** die Datenbankstruktur automatisch abhängig von dem Datenmodell aufgebaut wird, und/oder
**dass** die Datenbankstruktur bei einer Änderung des Datenmodells automatisch an das Datenmodell angepasst wird.

9. Verfahren nach einem der vorhergehenden Ansprüche,
**dadurch gekennzeichnet,**
**dass** ein Zusammenhang (20) zwischen Modellelementen (11-17) des Datenmodells definierbar ist, und
**dass** der Zusammenhang (20) über die Schnittstelle (M1-M4, M8) der Betriebsmittelverwaltung (10) abfragbar ist.

10. Verfahren nach Anspruch 9,
**dadurch gekennzeichnet,**
**dass** über die Schnittstelle (M2) Eigenschaften der Betriebsmittel (11, 13) abfragbar sind, welche über den Zusammenhang (20) zusammenhängen.

11. Verfahren nach einem der vorhergehenden Ansprüche,
**dadurch gekennzeichnet,**
**dass** über die Schnittstelle (M1-M4) der Betriebsmittelverwaltung (10) auf Anfrage eines Benutzers (1) abhängig von dem Datenmodell Daten ausgegeben werden, oder
**dass** über die Schnittstelle (M1-M4, M8) der Betriebsmittelverwaltung (10) abhängig von dem Datenmodell Daten ausgegeben werden, sobald sich diese Daten geändert haben.

12. System zur Modellierung von Betriebsmitteln (11, 13) mittels eines Datenmodells,
wobei das System (30) Rechenmittel (32) und Speichermittel (31) umfasst,
wobei die Rechenmittel (32) ausgestaltet sind,
um eine Betriebsmittelverwaltung (10) bereitzustellen, welche eine Schnittstelle (M1-M4, M8) bereitstellt, über die das Datenmodell zugreifbar ist und über die von dem Datenmodell gespeicherte Daten zugreifbar sind,
um mittels der Speichermittel (31) das Datenmodell in einem Modellierungswerkzeug (4) zu speichern, über welches die Betriebsmittelverwaltung (10) auf das Datenmodell zugreift, und um Daten mittels einer Datenbankstruktur, welche von dem Datenmodell abhängt, mittels der Speichermittel (31) in einer Datenbank (2) zu speichern, auf welche die Betriebsmittelverwaltung (10) zugreift, um Daten in der Datenbank (2) zu speichern oder Daten aus der Datenbank (2) zu lesen, wobei die Daten Eigenschaften der Betriebsmittel (11, 13) umfassen.

13. System nach Anspruch 12,
**dadurch gekennzeichnet,**
**dass** das System (30) zur Ausführung des Verfahrens nach einem der Ansprüche 1-11 ausgestaltet ist.

14. Computerprogrammprodukt, welches ein Programm umfasst und direkt in einen Speicher eines programmierbaren Systems (30) ladbar ist, mit Programm-Mitteln, um alle Schritte des Verfahrens nach einem der Ansprüche 1-11 auszuführen, wenn das Programm in dem System (30) ausgeführt wird.

15. Elektronisch lesbarer Datenträger mit darauf gespeicherten elektronisch lesbaren Steuerinformationen, welche derart ausgestaltet sind, dass sie bei Verwendung des Datenträgers in einem System (30) das Verfahren nach einem der Ansprüche 1-11 durchführen.
